# EUROPEAN PATENT APPLICATION

(11) **EP 4 641 717 A1**
(43) Date of publication of application: **29.10.2025**
(21) Application number: 24171516.8
(22) Date of filing: 22.04.2024
(51) Int. Cl.: H01M 8/04225, H01M 8/04276, H01M 8/18

(54) **BLACKSTART CAPABLE FLOW BATTERY SYSTEM CONFIGURATION**

(71) Applicant: Siemens Energy Global GmbH & Co. KG, 81739 München (DE)
(72) Inventor: Sievert, Roland, 47199 Duisburg (DE)

(57) **Abstract**

A blackstart capable flow system 10 is provided having a first upper electrolyte storage tank 12, a second upper electrolyte storage tank 14, a first lower electrolyte storage tank 16, a second lower electrolyte storage tank 18, and a battery cell 20; all in operative association with a first electrolyte 22 and a second electrolyte 24.

## Description

### BACKGROUND

### 1. Field

The present invention relates in general to a blackstart capable flow battery system configuration, and more specifically to a large scale blackstart capable multimegawatt flow battery system configuration comprising a first upper electrolyte storage tank, a second upper electrolyte storage tank, a first lower electrolyte storage tank, a second lower electrolyte storage tank, and a battery cell; all in operative association with a first electrolyte and a second electrolyte.

### 2. Description of the Related Art

A flow battery is a type of electrochemical cell where chemical energy is provided by two liquid electrolytes that flow through a battery cell on opposing sides of a central membrane. Ion transfer inside the battery cell occurs through the membrane while the liquid electrolytes circulate along their own respective circuit loops. Flow batteries can be used for large-scale energy storage and configured to convert electrical energy into chemical energy that can be stored and later released on demand. Upon charging, the electrical energy supplied causes a chemical reduction reaction in one electrolyte and an oxidation reaction in the other electrolyte. Upon discharge, the chemical energy contained in the liquid electrolytes is released in the reverse reactions and electrical energy drawn from the electrodes. The flow batteries can be used in grid-connected energy storage systems and/or in off-grid energy storage systems, too.

A fundamental difference between conventional and flow batteries involves where the energy is stored. In conventional batteries energy is stored in the electrode, whereas in flow batteries energy is stored in the electrolytes. Flow batteries enjoy several advantages over conventional rechargeable batteries with solid electroactive materials, such as: independent power scaling (which can be adjusted by stack size), independent energy scaling (which can be adjusted by liquid electrolyte tank size), long cycle life, long calendar life, and potentially lower total cost of ownership. Moreover, a flow battery has many flexible and additional uses, such as like a fuel cell where a new charged negolyte (e.g. reducer or fuel) and charged posolyte (e.g. oxidant) are added to the system, and like a rechargeable battery where an electric power source drives regeneration of the reducer and oxidant.

However, flow batteries suffer from the requirement that the liquid electrolytes must be circulating in their circuit loop to produce ionic activity and thus energy. Therefore, without such electrolyte circulation, no power can be produced. Current solutions to initially power e.g. blackstart the electrolyte circulation involve utilizing a standalone conventional battery. But there remains a need to initially power the electrolyte circulation through safer, more reliable and otherwise improved means.

### SUMMARY

In an aspect of the invention, a blackstart capable flow system 10 is provided, comprising: (i) a first upper electrolyte storage tank 12 and a second upper electrolyte storage tank 14; (ii) a first lower electrolyte storage tank 16 in fluid communication with the first upper electrolyte storage tank 12; (iii) a second lower electrolyte storage tank 18 in fluid communication with the second upper electrolyte storage tank 14; (iv) a battery cell 20 in operative association with the first upper storage tank 12, the second upper storage tank 14, the first lower storage tank 16, and the second lower storage tank 18; (v) a first conduit 26 that forms a first circuit loop 28 of fluid communication between the first upper electrolyte storage tank 12 and the first lower electrolyte storage tank 16, the first circuit loop 28 having a valve 34 and a pump 38 arranged thereon; and (vi) a second conduit 30 that forms a second circuit loop 32 of fluid communication between the second upper electrolyte storage tank 14 and the second lower electrolyte storage tank 18, the second circuit loop 32 having a valve 36 and a pump 40 arranged thereon.

In another aspect of the invention, a method of blackstarting a flow battery system 10 is provided, comprising: (i) arranging a first upper electrolyte storage tank 12 in fluid communication with a first lower electrolyte storage tank 16 along a first circuit loop 28 having a valve 34 and a pump 38, the size and location of the first upper tank 12 relative to the first lower tank 16 providing for a pressure head of potential energy from a first electrolyte 22 fluid flow along a first circuit loop 28 from the first upper tank 12 to the first lower tank 16, (ii) arranging a second upper electrolyte storage tank 14 in fluid communication with a second lower electrolyte storage tank 18 along a second circuit loop 32 having a valve 36 and a pump 40, the size and location of the second upper tank 14 relative to the second lower tank 18 providing for a pressure head of potential energy from a second electrolyte 24 fluid flow along a second circuit loop 32 from the second upper tank 14 to the second lower tank 18;and (iii) arranging a battery cell 20 between the first upper storage tank 12 and the first lower storage tank 16 and between the second upper storage tank 14 and the second lower storage tank 18, the battery cell 20 configured to receive the first electrolyte 22 along the first circuit loop 28 and to receive the second electrolyte 24 along the second circuit loop 32; (iv) opening the first valve 34 so that the first electrolyte 22 flows from the first upper storage tank 12 through the battery cell 20 to the first lower storage tank 16 and opening the second valve 36 so that the second electrolyte 24 flows from the second upper storage tank 14 through the battery cell 20 to the second lower storage tank 18, the first and second electrolyte 22, 24 flow sufficient to generate ionic activity in the battery cell 20 to power the first pump 38 and circulate the first electrolyte 22 along the first circuit loop 28 and to power the second pump 40 and circuit the second electrolyte 24 along the second circuit loop 32 to thereby achieve a steady state energy generation by the battery cell 20.

These and other features, aspects and advantages of the present invention will become better understood with reference to the following drawings, description and claims.

### BRIEF DESCRIPTION OF THE DRAWINGS

The invention is shown in more detail by help of figures. The figures show preferred configurations and do not limit the scope of the invention.
FIGURE 1 is a diagram of a blackstart capable flow battery system configuration.
FIGURE 2 is a flowchart showing a blackstart method for the blackstart capable flow battery system configuration of Figure 1.

### DETAILED DESCRIPTION

In the following detailed description of the present invention, reference is made to the accompanying drawings that form a part hereof, and in which is shown by way of illustration, and not by way of limitation, specific embodiments by which the invention may be practiced. It is to be understood that other embodiments may be utilized and that changes may be made without departing from the spirit and scope of the subject matter or present invention.

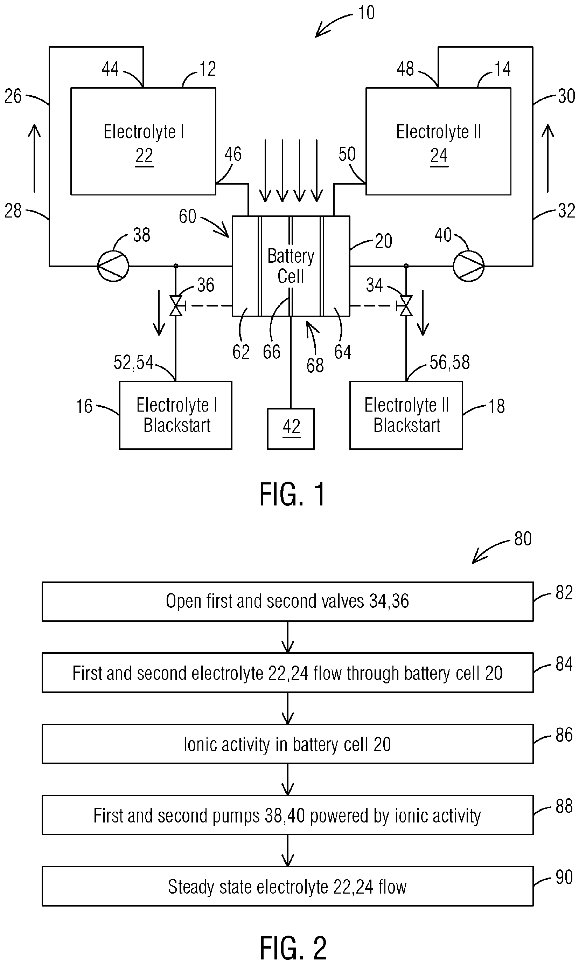

Referring to Figure 1, a schematic diagram illustrating an embodiment of a blackstart capable flow battery system 10 is provided. The flow battery system 10 is blackstart capable, where the flow battery system 10 can be self-powered from an off or no power condition to a powered condition. The flow battery 10 system also is capable of multimegawatt power generation such as but not limited to 2 - 20 MWh, but may be scaled up for higher power output or scaled down for lower power output. If used in a multimegawatt configuration, the flow battery system 10 may power an energy sink 42, such as a power source or draw, for example, power grid backup, industrial application(s), power cables, and the like. The flow battery system 10 may be embodied as any conventional, presently known or future flow battery system 10. The flow battery system 10 advantageously comprises a first upper electrolyte storage tank 12, a second upper electrolyte storage tank 14, a first lower electrolyte storage tank 16, a second lower electrolyte storage tank 18, and a battery cell 20; all in operative association with a first electrolyte 22 and a second electrolyte 24. The first tanks 12, 16 and battery cell 20 are connected in fluid communication with the first electrolyte 22 by a first conduit 26 to form a first circuit loop 28. The second tanks 14, 18 and battery cell 20 are connected in fluid communication with the second electrolyte 24 by a second conduit 30 to form a second circuit loop 32. By this configuration, first and second electrolyte 22, 24 circulation is provided through the battery cell 20 and ionic activity and energy thereby generated, even under blackstart conditions as next discussed.

During blackstart operation of the flow battery system 10, a first valve 34 arranged along the first circuit loop 28 between the first upper electrolyte tank 12 and the first lower electrolyte 16 is opened and a second valve 36 arranged along the second circuit loop 32 between the second upper electrolyte tank 14 and the second lower electrolyte 18 is opened. The opened first and second valves 34, 36 allows, via gravity, a flow of the first electrolyte 22 from the first upper electrolyte tank 12 through the battery cell 20 to the first lower electrolyte tank 16 and a flow of the second electrolyte 24 from the second upper electrolyte tank 14 through the battery cell 20 to the second lower electrolyte tank 18. This electrolyte 22, 24 flow through the battery cell 20 has a flow rate or flow pressure sufficient to initiate electrolyte 22, 24 ionic activity in the battery cell 20 which, in turn, provides sufficient power to power a first pump 38 that circulates the first electrolyte 22 flow along the first circuit loop 28 and a second pump 40 that circulates the second electrolyte 24 flow along the second circuit loop 32. Blackstart steady state flow and flow battery system 10 operation is thereby achieved. Generated energy may be used by or through an energy sink 42.

Still referring to Figure 1, a flow battery system 10 is provided. The flow battery system comprises: (i) a first upper electrolyte storage tank 12, (ii) a second upper electrolyte storage tank 14, (iii) a first lower electrolyte storage tank 16, (iv) a second lower electrolyte storage tank 18, (v) a battery cell 20; all in operative association with (vi) a first electrolyte 22 and a second electrolyte 24.

The first upper electrolyte storage tank 12 may have a storage capacity between 100 - 500,000 gallons or more, depending on the intended use. The first upper electrolyte storage tank 12 may be configured in any geometric design such as cylindrical, conical, frustoconical and rectangular, although any polynomial or shaped design that allows for first electrolyte 22 movement within the first upper tank 12 from a first upper inlet 44 to a first upper outlet 46 may be used. The first upper tank 12 may be oriented, canted or angled to more efficiently, e.g. via gravity, allow for first electrolyte 22 movement and circulation within the first upper tank 12, although first upper tank 12 pumps or other mechanisms may also be used to assist with first electrolyte 22 movement and circulation within the first upper tank 12. The first upper electrolyte storage tank 12 may be made from a metallic, ceramic or plastic material, which may or may not be lined with a chemically inert material, although other materials suitable to contain and maintain the first electrolyte 22 with no or minimal ionic reactivity and temperature variance also could be used. In an exemplarity embodiment, the first upper electrolyte storage tank 12 has a storage capacity of 50,000 gallons, a cylindrical geometry, and is made from plastic material.

The second upper electrolyte storage tank 14 may have a storage capacity between 100 - 500,000 gallons or more, depending on the intended use. The second upper electrolyte storage tank 14 may be configured in any geometric design such as cylindrical, conical, frustoconical and rectangular, although any polynomial or shaped design that allows for second electrolyte 24 movement within the second upper tank 14 from a second upper inlet 48 to a second upper outlet 50 may be used. The second upper tank 14 may be oriented, canted or angled to more efficiently, e.g. via gravity, allow for second electrolyte 24 movement and circulation within the second upper tank 14, although second upper tank 14 pumps or other mechanisms may also be used to assist with second electrolyte 24 movement and circulation within the second upper tank 14. The second upper electrolyte storage tank 14 may be made from a metallic, ceramic or plastic material, which may or may not be lined with a chemically inert material, although other materials suitable to contain and maintain the second electrolyte 24 with no or minimal ionic reactivity and temperature variance also could be used. In an exemplarity embodiment, the second upper electrolyte storage tank 14 has a storage capacity of 50,000 gallons, a cylindrical geometry, and is made from plastic material.

The first lower electrolyte storage tank 16 may have a storage capacity greater than, similar to, or less than the first upper electrolyte storage tank, depending on the intended use. The first lower electrolyte storage tank 16 may be configured in any geometric design such as cylindrical, conical, frustoconical and rectangular, although any polynomial or shaped design that allows for first electrolyte 22 movement within the first lower tank 16 from a first lower inlet 52 to a first lower outlet 54 may be used (the illustrated embodiment showing a single inlet functioning as both the first lower inlet 52 and the first lower outlet 54). The first lower tank 16 may be oriented, canted or angled to more efficiently, e.g. via gravity, allow for first electrolyte 22 movement and circulation within the first lower tank 16, although first lower tank 16 pumps or other mechanisms may also be used to assist with first electrolyte 22 movement and circulation within the first lower tank 16. The first lower electrolyte storage tank 16 may be made from a metallic, ceramic or plastic material, which may or may not be lined with a chemically inert material, although other materials suitable to contain and maintain the first electrolyte 22 with no or minimal ionic reactivity and temperature variance also could be used. In an exemplarity embodiment, the first lower electrolyte storage tank 16 has a storage capacity of 50,000 gallons, cylindrical geometry, and is made from plastic material.

The second lower electrolyte storage tank 18 may have a storage capacity greater than, similar to, or less than the first upper electrolyte storage tank, depending on the intended use. The second lower electrolyte storage tank 18 may be configured in any geometric design such as cylindrical, conical, frustoconical and rectangular, although any polynomial or shaped design that allows for second electrolyte 24 movement within the second lower tank 18 from a second lower inlet 56 to a second lower outlet 58 may be used (the illustrated embodiment showing a single inlet functioning as both the second lower inlet 56 and the second lower outlet 58). The second lower tank 18 may be oriented, canted or angled to more efficiently, e.g. via gravity, allow for second electrolyte 24 movement and circulation within the second lower tank 18, although second lower tank 18 pumps or other mechanisms may also be used to assist with second electrolyte 24 movement and circulation within the second lower tank 18. The second lower electrolyte storage tank 18 may be made from a metallic, ceramic or plastic material, which may or may not be lined with a chemically inert material, although other materials suitable to contain and maintain the second electrolyte 24 with no or minimal ionic reactivity and temperature variance also could be used. In an exemplarity embodiment, the second lower electrolyte storage tank 18 has a storage capacity of 50,000 gallons, a cylindrical geometry, and is made from plsatic material.

The size and location of the first upper tank 12 relative to the first lower tank 16 provides for a pressure head of potential energy from first electrolyte 22 fluid flow along the first circuit loop 28 from the first upper tank 12 to the first lower tank 16 (with the battery cell 20 therebetween). In more detail, the first upper tank 12 has a capacity of 0.2 - 5 times the capacity of the first lower tank 16, and the first upper tank 12 is located at a height of 2 - 200 feet above the first lower tank 16. Similarly, the size and location of the second upper tank 14 relative to the second lower tank 18 provides for a pressure head of potential energy from second electrolyte 24 fluid flow along the second circuit loop 32 from the second upper tank 14 to the second lower tank 18 (with the battery cell 20 therebetween). In more detail, the second upper tank 14 has a capacity of 0.2 - 5 times the capacity of the second lower tank 18, and the second upper tank 14 is located at a height of 2 - 200 feet above the second lower tank 18. In the exemplarity embodiment, the first upper tank 12 has a capacity of 1 times the capacity of the first lower tank 16, the second upper tank 14 has a capacity of 1 times the capacity of the second lower tank 18, the first upper tank 12 is arranged at a height differential of 20 feet above the first lower tank 16, and the second upper tank 14 is arranged at a height differential of 20 feet above the second lower tanks 18.

By this configuration, during blackstart, the first valve 34 is opened to allow first electrolyte 22 flow along the first circuit loop 28 from the first upper tank 12 to the first lower tank 16 (with the battery cell 20 therebetween) and the second valve 36 is opened to allow second electrolyte 24 flow along the second circuit loop 32 from the second upper tank 14 to the second lower tank 18 (with the battery cell 20 therebetween). This first and second electrolyte 22, 24 flow through the battery cell 20, powered by the pressure head of potential energy, is sufficient to generate ionic activity and energy thereby. This generated energy may be then used to power the first and second pumps 38, 40 which, in turn, may circulate the first and second electrolytes 22, 24 to achieve steady state energy generation. The steady state energy generation may be used by the energy sink 42, although it may be used in other manners or with other components.

The battery cell 20 comprises a positive electrolyte or anode 62 made of any suitable electrochemical material, a negative electrolyte or cathode 64 made of any suitable electrochemical material, and a membrane 66 made of any suitable electrochemical material interposed between the anode 62 and cathode 64. The battery cell 20 is configured to receive the first and second electrolytes 22, 24. As illustrated, the battery cell 20, integrates or otherwise accepts the first and second circuit loops 28, 32 in order to receive the first and second electrolytes 22, 24. As further illustrated, the first circuit loop 28 enters the battery cell 20 between the anode 62 and membrane 66, and the second circuit loop 32 enters the battery cell 20 between the cathode 64 and membrane 66. However, there is no requirement that this exemplarily illustrated configuration be used. Rather, the battery cell 20 and first and second circuit loops 28, 32 need only be configured to pass at least a portion of the first and second electrolytes 22, 24 to the battery cell 20 in order to allow sufficient ionic activity of the battery cell 20 to occur, as described above.

The first electrolyte 22 may comprise any suitable electrochemical composition. The second electrolyte 24 may comprise any suitable electrochemical composition.

Still referring to Figure 1, while the illustrated embodiment shows just one battery cell 20, depending on the desired power output, configuration and other factors, a plurality or stack 68 of battery cells 20 may be used, as will be understood by those skilled in the art.

Referring now to Figure 2, a blackstart method 70 is shown. Step One 72 comprises opening the first and second valves 34, 36. As discussed above, opening the first valve 34 allows first electrolyte flow 22 along the first circuit loop 28 from the first upper tank 12 to the first lower tank 16. As also discussed above, opening the second valve 36 allows second electrolyte flow 24 along the second circuit loop 32 from the second upper tank 14 to the second lower tank 18. Step Two 74 comprises flowing at least a portion of the first and second electrolyte 22, 24 into the battery cell 20. Figure 1 exemplarily shows accomplishing this flow by passing the first and second circuit loops 28, 32 through the battery cell 20, but other suitable configurations may be used to accomplish this Step Two 74. Step Three 76 comprises achieving ionic activity in the battery cell 20. As discussed, above, this ionic activity may be achieved by flowing the first electrolyte 22 of Step Two 74 into ionic communication with the anode 62 of the battery cell 20, and flowing the second electrolyte 24 of Step Two into ionic communication with the cathode 64 of the battery cell 20. Step Four 78 comprises powering the first and second pumps 38, 40 from the ionic activity of Step Three 76. Step Five 80 comprises attaining a steady state energy generation by the battery cell 20 or stack 68. As discussed above, this steady state energy generation may involve powering an energy sink 42, such as a power source or draw, for example, power grid backup, industrial application(s), power cables, and the like. Power grid may be public, industrial, islanded or other. As also discussed above, the flow battery 10 system is capable of multimegawatt power generation, but may be scaled up for higher power output or scaled down for lower power output.

While the above-described blackstart capable flow battery system 10 has been illustrated in an exemplary context of use to accommodate blackstart operation, the flow battery system 10 can be used in many other contexts of use. Some exemplary applications include non-blackstart operation and surplus energy flow delayed use such as renewable, as will be understood by those skilled in the art.

While specific exemplary embodiments and illustrations have been described in detail, those with ordinary skill in the art will appreciate that various modifications and alternative to those details could be developed in light of the overall teachings of the disclosure. Accordingly, the particular arrangements disclosed are meant to be illustrative only and not limiting as to the scope of the subject matter, which is to be given the full breadth of the appended claims, and any and all equivalents thereof.

## Claims

1. A blackstart capable flow battery system 10, comprising:
a first upper electrolyte storage tank 12 and a second upper electrolyte storage tank 14;
a first lower electrolyte storage tank 16 in fluid communication with the first upper electrolyte storage tank 12;
a second lower electrolyte storage tank 18 in fluid communication with the second upper electrolyte storage tank 14;
a battery cell 20 in operative association with the first upper storage tank 12, the second upper storage tank 14, the first lower storage tank 16, and the second lower storage tank 18;
a first conduit 26 that forms a first circuit loop 28 of fluid communication between the first upper electrolyte storage tank 12 and the first lower electrolyte storage tank 16, the first circuit loop 28 having a valve 34 and a pump 38 arranged thereon; and
a second conduit 30 that forms a second circuit loop 32 of fluid communication between the second upper electrolyte storage tank 14 and the second lower electrolyte storage tank 18, the second circuit loop 32 having a valve 36 and a pump 40 arranged thereon.

2. The blackstart capable flow battery system 10 of claim 1,
wherein the size and location of the first upper tank 12 relative to the first lower tank 16 provides for a pressure head of potential energy from first electrolyte 22 fluid flow along the first circuit loop 28 from the first upper tank 12 to the first lower tank 16, and
wherein the size and location of the second upper tank 14 relative to the second lower tank 18 provides for a pressure head of potential energy from second electrolyte 24 fluid flow along the second circuit loop 32 from the second upper tank 14 to the second lower tank 18.

3. The blackstart capable flow battery system 10 of claim 2,
wherein the first upper electrolyte storage tank 12 has a storage capacity of 100 - 500,000 gallons, a cylindrical geometry and is made from plastic material,
wherein the second upper electrolyte storage tank 14 has a storage capacity of 100 - 500,000 gallons, a cylindrical geometry and is made from plastic material,
wherein the first lower electrolyte storage tank 16 has a storage capacity of 100 - 500,000 gallons, a cylindrical geometry and is made from plastic material, and
wherein the second lower electrolyte storage tank 18 has a storage capacity of 100 - 500,000 gallons, a cylindrical geometry and is made from plastic material.

4. The blackstart capable flow battery system 10 of claim 3,
wherein the first upper tank 12 has a capacity of 0.2 -5 times the capacity of the first lower tank 16 and the first upper tank 12 is arranged at a height differential of 2 - 200 feet above the first lower tank 16, and
wherein the second upper tank 14 has a capacity of 0.2 -5 times the capacity of the second lower tank 18, and the second upper tank 14 is arranged at a height differential of 2 - 200 feet above the second lower tank 18.

5. The blackstart capable flow battery system 10 of claim 1, wherein the battery cell 20 is configured to receive the first electrolyte 22 and to receive the second electrolyte 24, and the battery cell 20 comprises an anode 62, a cathode 64 and a membrane interposed between the anode 62 and cathode 64.

6. The blackstart capable flow battery system 10 of claim 5, wherein the battery cell 20 is arranged between the first upper storage tank 12 and the first lower storage tank 16, and between the second upper storage tank 14 and the second lower storage tank 18.

7. The blackstart capable flow battery system 10, of claim 6, wherein the battery cell 20, integrates or otherwise accepts the first and second circuit loops 28, 32 in order to receive the first and second electrolytes 22, 24.

8. The blackstart capable flow battery system 10 of claim 7, wherein the first circuit loop 28 enters the battery cell 20 between the anode 62 and membrane 66, and the second circuit loop 32 enters the battery cell 20 between the cathode 64 and membrane 66.

9. The blackstart capable flow battery system 10 of claim 1, wherein the flow battery system provides multimegawatt power generation, preferably 2 - 20 MWh of power.

10. The blackstart capable flow battery system 10 of claim 9, wherein the power generated by the flow battery system 10 is used by or through an energy sink 42, the energy sink 42 being a power source or draw selected from the group consisting of: a power grid backup, an industrial application, or a power cable.

11. The blackstart capable flow battery system 10 of claim 1, wherein a plurality of battery cells 20 are used to form a stack 68 of battery cells 20.

12. The blackstart capable flow battery system 10 of claim 1, wherein a first electrolyte 22 and a second electrolyte 24 are provided in fluid circulation through the battery cell 20 sufficient to generate ionic activity in the battery cell 20.

13. A method of blackstarting a flow battery system 10, comprising:
arranging a first upper electrolyte storage tank 12 in fluid communication with a first lower electrolyte storage tank 16 along a first circuit loop 28 having a valve 34 and a pump 38, the size and location of the first upper tank 12 relative to the first lower tank 16 providing for a pressure head of potential energy from a first electrolyte 22 fluid flow along a first circuit loop 28 from the first upper tank 12 to the first lower tank 16
arranging a second upper electrolyte storage tank 14 in fluid communication with a second lower electrolyte storage tank 18 along a second circuit loop 32 having a valve 36 and a pump 40, the size and location of the second upper tank 14 relative to the second lower tank 18 providing for a pressure head of potential energy from a second electrolyte 24 fluid flow along a second circuit loop 32 from the second upper tank 14 to the second lower tank 18;
arranging a battery cell 20 between the first upper storage tank 12 and the first lower storage tank 14 and between the second upper storage tank 14 and the second lower storage tank 18, the battery cell 20 configured to receive the first electrolyte 22 along the first circuit loop 28 and to receive the second electrolyte 24 along the second circuit loop 32;
opening the first valve 34 so that the first electrolyte 22 flows from the first upper storage tank 12 through the battery cell 20 to the first lower storage tank 16 and opening the second valve 36 so that the second electrolyte 24 flows from the second upper storage tank 14 through the battery cell 20 to the second lower storage tank 18, the first and second electrolyte 22, 24 flow sufficient to generate ionic activity in the battery cell 20 to power the first pump 38 and circulate the first electrolyte 22 along the first circuit loop 28 and power the second pump 40 and circuit the second electrolyte 24 along the second circuit loop 32 to thereby achieve a steady state energy generation by the battery cell 20.

14. The method of claim 13, wherein the first and second valves 34, 36 are arranged to selectively allow or restrict the first and second electrolyte 22, 24 fluid flow.

15. The method of claim 13, wherein the first and second pumps 38, 40 are arranged to selectively power the first and second electrolyte 22, 24 fluid flow.
